# EUROPEAN PATENT SPECIFICATION

(11) **EP 1 430 680 B1**
(45) Date of publication and mention of the grant of the patent: **15.08.2007**
(21) Application number: 02755301.5
(22) Date of filing: 02.09.2002
(51) Int. Cl.: H04L 29/06

(54) **SERVER WITH FILE VERIFICATION**
SERVER MIT DATEIVERIFIKATION
SERVEUR AVEC VERIFICATION DE FICHIER

(30) Priority: 03.09.2001 GB 0121299
(43) Date of publication of application: 23.06.2004
(73) Proprietor: Intercede Limited, Lutterworth, Leicestershire LE17 4PS (GB)
(72) Inventor: EDWARDS, Christopher 16 Kingsdown Mount, Nottingham NG8 2RQ (GB); WARD, Christopher, Robert 26 Bentinck Avenue, Nottingham NG12 4ED (GB)
(74) Representative: Beresford, Keith Denis Lewis
(86) International application number: PCT/GB2002/004004
(87) International publication number: WO 2003/021908

(56) References cited:
- EP-A- 1 069 745
- US-B1- 6 208 999

## Description

This invention relates to responding to requests for information, and in particular but not exclusively to the use of servers to automatically respond to requests for information based on information stored in files accessible to a processor of the server.

Such servers are commonly used in private and public networks in a variety of contexts and are known e.g. from EP 106 975 A1.

In the case of an internet web server, the information contained in a response may be presented as a web page which may be static or may be dynamically generated, typically being generated by an application operating on one or more stored files. The response may also include web pages providing form filling facilities used during commercial transactions or the exchange of confidential information.

Such servers are known to be open to attack with the intent of malicious defacement of web pages provided by the server. Attackers may also have fraudulent intent to release confidential information held by the server or to effect fraudulent transactions of various kinds, including those which rely upon changing a form defined in a web page in such a way that a client responds by disclosing confidential information to the attacker.

Such attacks commonly seek to modify the files stored in the web server such that the generated web pages are modified to suit the intentions of the attacker. Firewall systems are commonly used to protect such servers and, depending upon their complexity, may be relatively successful in deterring most attackers. Such firewall systems are however not impenetrable and cannot guard against attack from those with privileged access to the environment protected by the firewall.

It is possible for the files to be stored in a form in which a processor of the server has access on a read-only basis. A number of devices provide such a facility, such as CD ROM drives in which the storage medium is incapable of being rewritten, or such as devices in which a storage medium which can be rewritten is protected by electronic logic in a storage system which is thereby rendered capable of access on a read only basis.

A problem with such read-only memories suitable for bulk storage of files is that access to the files is typically slower than the access time available when a processor has access to files in random access memory such as a memory circuit array or hard disc drive. For such fast access memories, it is generally not practicable to reliably prevent files being re-written.

It is also known to perform a validation of the integrity of stored files by computing a validation function of the file contents to obtain a security value which may then be compared with a reference value, the reference value having been previously computed by a similar method, for example when the file was created. Any difference between the security value and the reference value thereby provides an indication that the file contents have changed.

A problem with such validation methods is that an attacker may not only alter the file but may access the validation function to compute the new security value for the corrupt file and may change the reference value accordingly. A subsequent calculation of a security value will then fail to detect the corruption of the file because the security value and (altered) reference value will match.

The problem above is solved by a method, an apparatus and a storage medium according to claims 1, 17 and 33. The present invention seeks to provide an improved apparatus and method for responding to requests for information.

An embodiment of the present invention provides a method and apparatus in which files are stored in a server in rapidly accessible form and in which the file contents are verified when generating a response to a request for information.

Preferred embodiments of the present invention will now be described by way of example only and with reference to the accompany drawings of which:
Figure 1 is a schematic drawing of a server in the context of providing web pages via the internet;
Figure 2 is a schematic drawing showing further detail of the server of Figure 1;
Figure 3 is a flowchart showing steps of the process of generating a web page;
Figure 4 is a flowchart detailing the file verification step of Figure 3;
Figure 5 is a flowchart illustrating a file signing process;
Figure 6 is a schematic diagram illustrating the data structure of data stored in RAM;
Figure 7 is a diagram representing software provided to the server;
Figure 8 is a schematic diagram showing the flow of data in the verification process; and
Figure 9 is a schematic diagram illustrating methods of providing programs to the server.

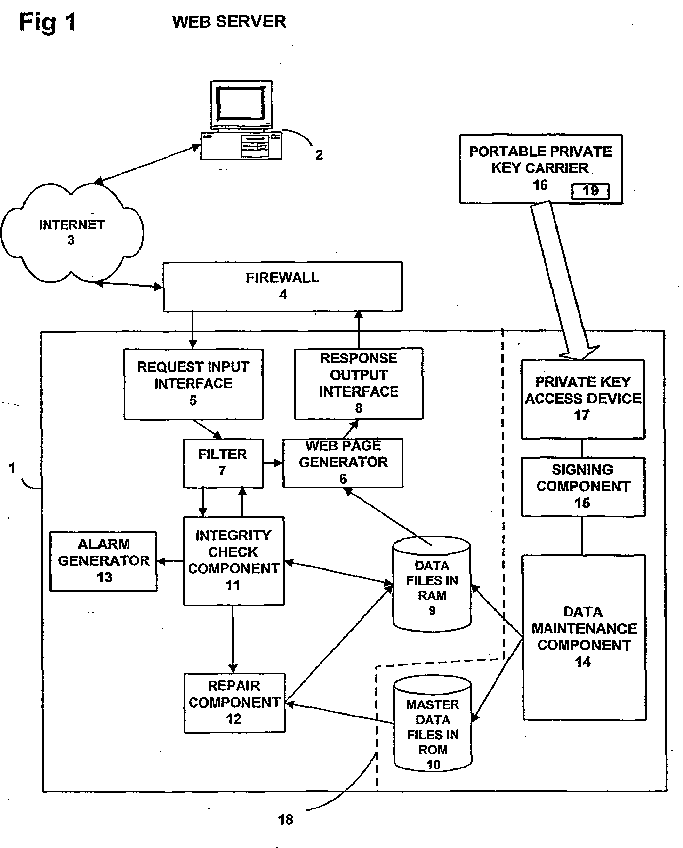

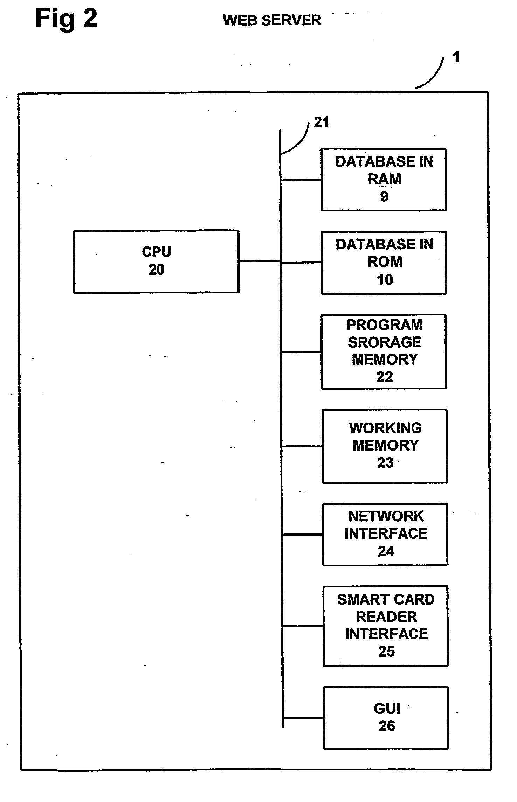

Figure 1 shows schematically a web server 1 for responding to requests from client terminals 2 via the internet 3. Hardware structure of the server 1 including a processor 20 is shown in Figure 2 described below. A firewall 4 provides a measure of security against external attack from malicious attackers via the internet 3 to the web server 1 by acting as a proxy server which allows the throughput of communications only after verifying their authenticity. Although the firewall 4 is represented in Figure 1 as a single element, it typically comprises a system of plural components which may-be interconnected via a public or private network.

The web server 1 receives request messages from client terminal 2 via a request input interface 5 which communicates the request to a web page generator 6 via a filter 7.

Web pages generated by the web page generator 6 are output as response messages by a response output interface 8 to be routed to the client terminal 2 via the internet 3.

A collection of files is stored in a first memory 9 which has the characteristics of a Random Access Memory (RAM) in that it facilitates the rapid reading and writing of information from and to the memory, thereby facilitating the rapid retrieval of files via the web page generator 6.

Copies of the files stored in the first memory 9 are also stored as master files in a second memory 10 which has the characteristics of Read Only Memory (ROM) such that the web page generator 6 and its associate components. have access to the- master files on a read only basis. In the example of Figure 1, the second memory 10 is in the form of a CD ROM in which the CD constitutes a non-rerecordable storage medium.

The filter 7 functions to trap incoming request messages received via the request input interface 5 and to release the request messages to the web page generator 6 only after completion of a validation process. The request input interface 5 identifies from the context of the request a list of files required by the web page generator 6 to generate the response message, i.e. web page. This list of files is passed by the filter 7 to an integrity checking component 11 which, for each listed file, checks the integrity of the file stored in the first memory 9. When the integrity of all of the files in the list.is confirmed, this is communicated to the filter 7 which then releases the request message for processing by the web page generator 6 using the listed files.

If however the contents of any one of the listed files are determined by the integrity checking component 11 to be corrupt, the identity of the file is indicated to a repair component 12 which retrieves a corresponding master file from the second memory 10 and uses the master file to repair the contents of the first memory 9 by deleting the corrupt contents and replacing them with contents copied from the master file held in the second memory.

The integrity checking component 11 is then able to confirm the integrity of the file and the process of web page generation may then proceed.

An advantage of the above web server 1 is that the first memory 9 may be selected to have a relatively rapid response time thereby ensuring the rapid processing of input request messages. In the event that file corruption is discovered however, the process is necessarily slowed by the need to refer to the respective master file held in the second memory 10 which has a relatively slow response time and to effect repair before continuing. Subsequent rapid service in responding to further requests is then resumable.

The web server 1 is thereby rendered substantially immune to attack since any information provided by the server 1 is verified at the point of delivery.

An alarm generating module 13 is also provided and arranged to receive an alarm signal from the integrity checking component 11 in the event of a corrupt file being discovered. The alarm may be in the form of a notification output to an operator or a signal to a controlling system which may generate a report and initiate automatically further remedial action such as a systematic check of the validity of all files held in the first memory 9.

A data maintenance component 14 is operable to write data into the second memory 10, for example when a new file is created. In the present example, the data maintenance component 14 comprises software and hardware for writing data to a non-rewritable compact disc. If an existing file requires updating to include amended data while retaining its original file identifier, it will therefore be necessary to replace the recording medium, i.e. the compact disc, by providing a new compact disc on which all of the files are newly recorded.

The integrity checking component 11 is operable to check the integrity of a file held in the first memory 9 by computing a verification function applied to the file contents to obtain a computed security value. In the present example, the function is a standard SHA1 hashing function, the result of which is 160 bytes of data which constitute the security value. For each file stored in the first memory 9, a respective signature is also stored, the signature being generated by a signing component 15 at the time of file entry into the server 1, the signature being the result of first operating the verification function on the file contents and then encrypting the resulting security value using a private key to obtain the signature. During this encryption process, a person having privileged access such as a system administrator is required to present a portable private key carrier 16 to a private key access device 17 of the web server 1 to enable the private key 19 to be read and input to the signing component 15. In the present example, the portable private key carrier 16 is a smart card and the private key access device 17 is a smart card reader. The portable private key carrier 16 is removed immediately after the signing process so as not to be available to the processor 20 and other users of the web server 1. Any attacker who gains access to the processor 20 cannot therefore obtain the private key 19 and is thereby prevented from generating signatures capable of defeating the verification process.

The process of verification will be described in greater detail below.

Figure 2 illustrates schematically the hardware comprising the web server 1, including processor 20 connected via a databus 21 to the first and second memories 9 and 10. Also connected to the databus 21 is a program storage memory 22 (typically a hard disc drive) for storing the programs required for operating the server, a working memory 23 (RAM), a network interface 24, a smart card reader interface 25 and a graphical user interface (GUI) 26.

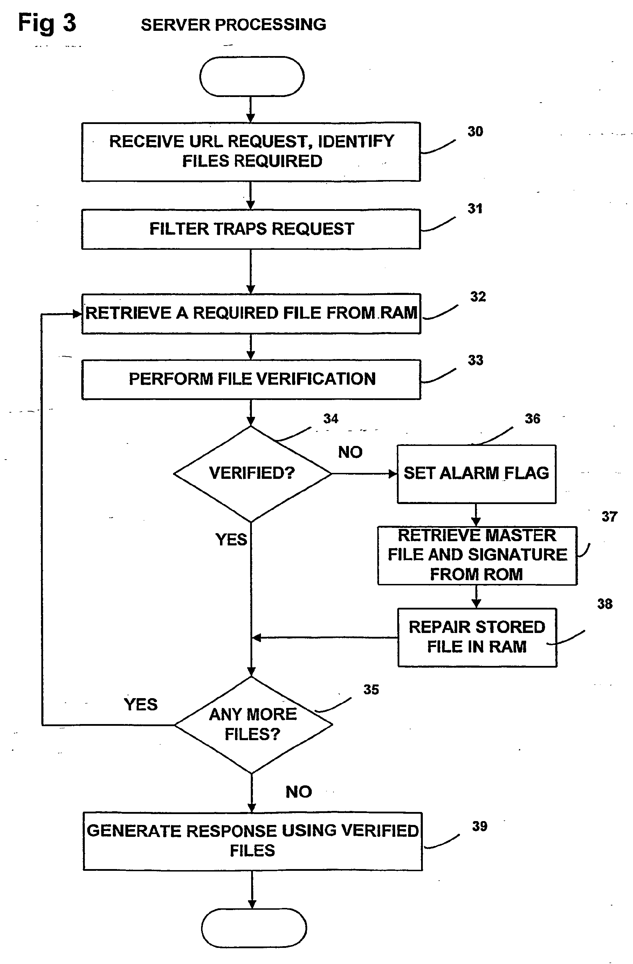

Figure 3 illustrates the steps of the method carried out by the web server 1 in processing a request received from client terminal 2.

At step 30, the web server 1 receives a request via the firewall 4 , the request message having been originated by browser software of the client terminal 2 and addressed to the web server using the appropriate universal resource locator (URL) of the web site. At step 30 the request input interface 5 analyses the request message and identifies the list of files required to generate an appropriate response.

At step 31, the request is trapped by filter 7 and at step 32 the integrity checking component 11 retrieves the first of the required files from the first memory 9.

At step 33, the integrity checking component 11 performs the file verification process on the file and at step 34, determines whether the integrity of the file is verified. If the result is that integrity is affirmed, it is determined at step 35 whether any more listed files remain to be verified and, if so, the process recommences from step 32.

If at step 34 the result is negative, i.e. the file is determined to be corrupt, an alarm flag is set at step 36 so that on completion of the verification process the necessary alarm messages and control actions are generated.

At step 37, a master file having the same identification as the corrupt file is read from the second memory 10 together with the stored signature of the master file and at step 38 the corrupt file is repaired by being replaced in the first memory 9 with a copy of the retrieved master file. The signature stored in the first memory 9 in correspondence with the corrupt file is also repaired by being overwritten by the signature retrieved from the second memory 10.

Step 35 then follows in which it is determined whether any further files remain.

Once the integrity of all files has been verified and any necessary repairs completed, step 39 follows in which the response message is generated using the verified files.

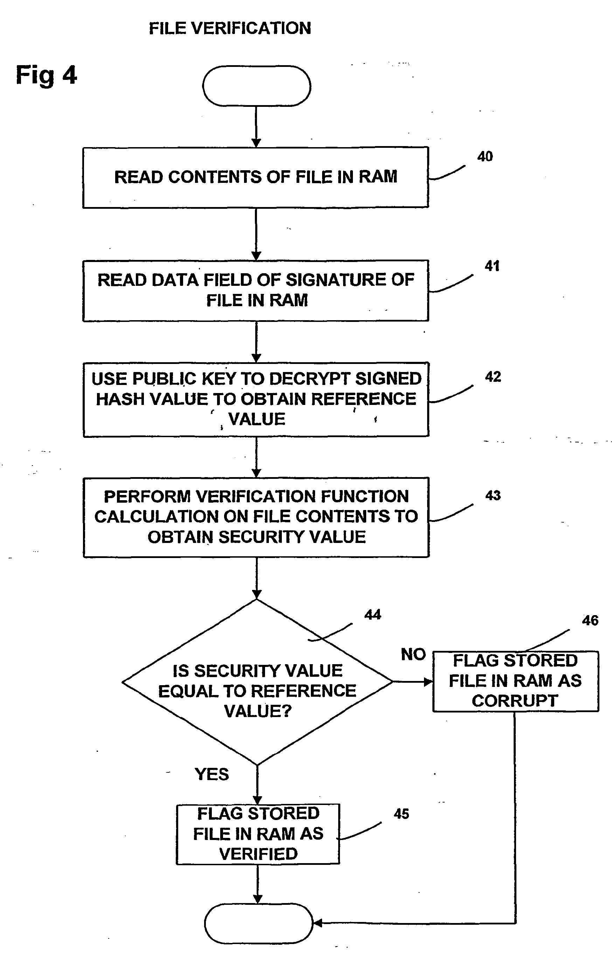

The file verification step 33 is illustrated in Figure 4.

In Figure 4 at step 40, the contents of the file are read from the first memory 9 and at step 41 the data field containing the signature of the file is also read from the first memory 9.

At step 42, the signature read in step 41 is decrypted using a public key available to the processor 20 to obtain a reference value. This reference value is equal to the result which was obtained when performing the verification function on the file contents at the time of entering the file into the server 1 when the signing component 15 encrypted the reference value to obtain the signature.

At step 43, the verification function is then applied to the contents of the file as read from the first memory 9 to obtain a security value.

At step 44, the security value is compared with the reference value and, if they are equal, the integrity of the file is confirmed and at step 45 a flag is set to indicate to subsequent processing steps that the integrity has been verified.

If however the security value is not equal to the reference value, this is taken as an indication that the file is corrupt and at step 46 a flag is set to indicate that the file is corrupt, thereby invoking the repair procedure.

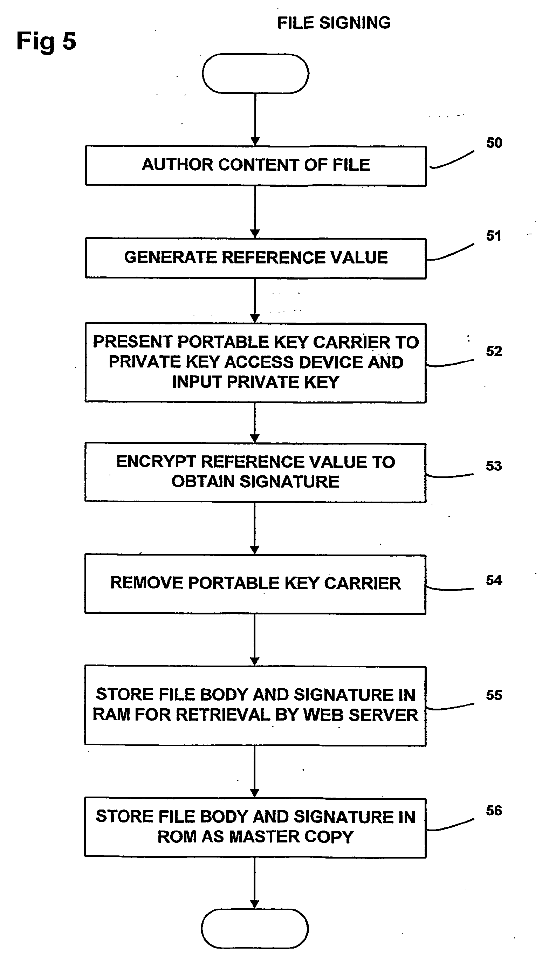

Figure 5 illustrates the process of signing the file as carried out by the signing component 15 whenever a file is newly entered into the web server 1.

At step 50, the contents of the file are authored or otherwise imported into the web server 1. At step 51, the verification function is applied to the contents of the file to obtain a numerical value, in the present example the numerical value being a hash value.

A system administrator at step 52 presents the portable key carrier 16 to the private key access device 17 which in the present example consists of presenting a smart card to a smart card reader. The private key for the encryption process is read from the portable private key carrier 16 (smart card) and used in step 53 to encrypt the reference value obtained in step 51.

At step 54, the portable key carrier 16 is removed from the private key access device 17.

At step 55, the encrypted reference value is stored as a file signature together with the contents of the file in the first memory 9. At step 56, the signature and file contents are stored in the second memory 10 to constitute a master copy of the file for use in any subsequent repair process.

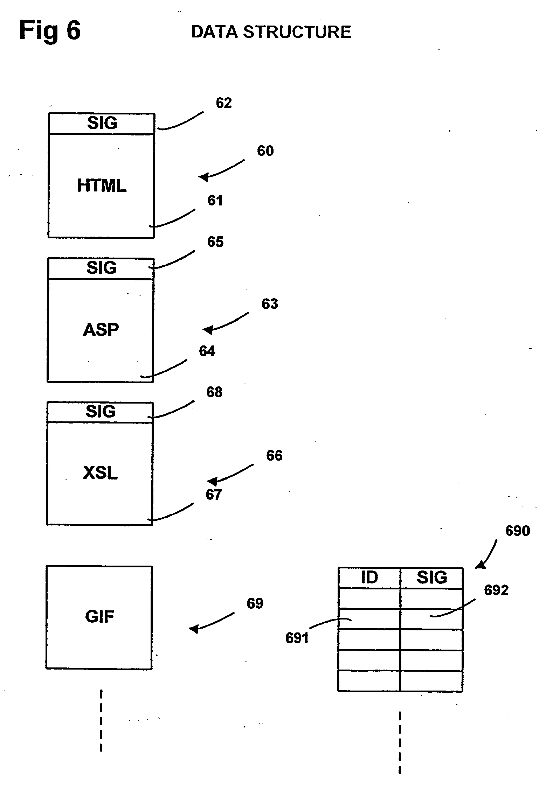

Figure 6 illustrates an example of files stored in the first and second memories 9 and 10. A first file 60 has contents 61 in HTML (HyperText Markup Language) format for use in generating the web page and a file header portion 62 which includes a data field in which the signature is stored.

The term "contents" is used in the present context to indicate the body of the code constituting the file, excluding any header portion of the file which contains the signature, so that in the preceding description, references to applying the verification function to the contents of a file should be construed as meaning that the function is applied to those contents 61 of the file which exclude the header 62.

A second file 63 contains contents 64 in ASP (Active Server pages) format for use in conjunction with the HTML file 60 in preparing the web page. The second file 63 similarly includes a header 65 which contains the signature obtained during the signing process by encrypting the reference value based on the contents 64.

A third file 66 contains contents 67 in the form of XML style sheets (XSL) for use in conjunction with the first and second files 60 and 63 in creating the web page. The third file 66 also includes a header portion 68 containing a respective signature.

A fourth file 69 contains data representing an image in GIF (Graphics Interchange Format) format. Since this type of file does not have provision for a header portion, the respective signature of the fourth file 69 must be stored separately and is included in a lookup table 690 stored in the first memory 9 and providing registration between file identifiers 691 and their respective signatures 692. Each file identifier 691 defines a memory address of the file to which the corresponding signature 692 relates.

A corresponding data structure including files and lookup table is stored in the second memory 10.

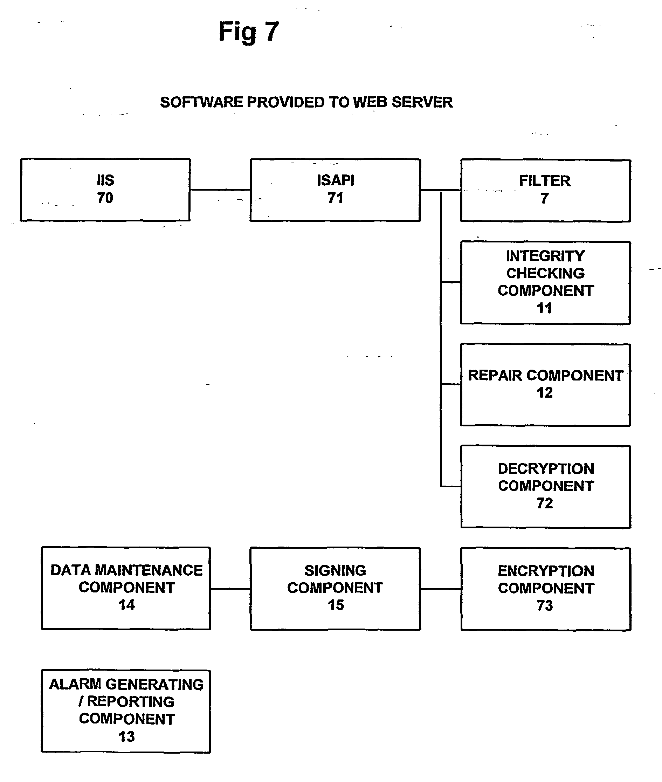

Figure 7 illustrates schematically the components of software included in the program storage memory 22 of Figure 2.

An IIS (Internet Information Server) 70 includes an ISAPI (Internet Server Application Programming Interface) 71 which is configured to define the filter component 7, integrity checking component 11 and repair component 12. The integrity checking component 11 includes decryption software 72 for decrypting signatures.

Data maintenance component 14 is also provided together with signing component 15 which includes encryption software 73.

Also included is alarm generating module 13.

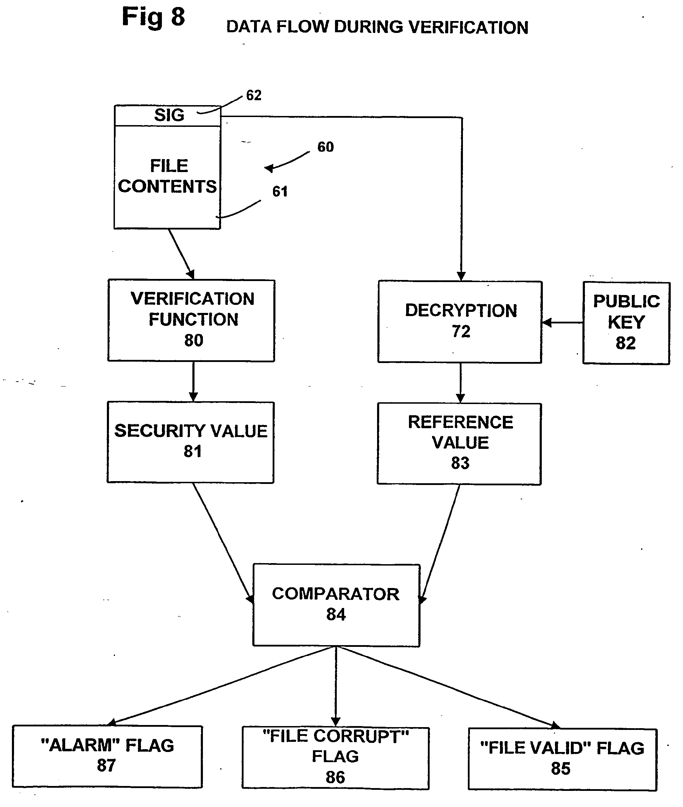

Figure 8 provides a convenient summary of the flow of data in the verification process described above with reference to Figure 4 in the case of the first file 60 of Figure 6 being the subject of the verification process.

As shown in Figure 8, the file contents 61 are input to the verification function 80, the computational result of which is a security value 81.

The signature 62 read from the file header of file 60 is decrypted using decryption software 72 and public key 82 stored in first memory 9 to obtain a reference value 83.

A comparator 84 then compares the security value 81 and reference value 83 and, if the values are identical, sets the FILE VALID flag 85. If the values are not identical, the comparator 84 sets the FILE CORRUPT flag 86 and ALARM flag 87.

Reference is made in the above description to encryption using a private key 19 and decryption using a public key 82. Such encryption software incorporating encryption and decryption algorithms is commercially available and typically relies upon the properties of modular arithmetic applied in a Galois field. For the purpose of the above disclosed embodiments, it is sufficient for a number encrypted using a first numerical key to be capable of decryption using a second numerical key related to the first numerical key in a manner which cannot be determined by an attacker. The first numerical key is referred to above as the private key, thereby implying that knowledge of the key is available only to those with privileged access to the system whereas the second numerical key, referred to as the public key 82, can be resident in the first memory 9 and accessible to the processor 20. An attacker who gains access to the processor may gain access to the public key 82 and, if the verification function 80 is also accessed, may decrypt the signature 62 of a stored file 60 in the first memory 9. If however the attacker modifies the file contents 61, the attacker has no means of determining a new value of signature 62 which, when decrypted by the integrity checking component 11, will equal the security value 81 calculated by the verification function 80 based on the modified file contents. This is because the attacker cannot have access to the private key 19 required to perform correct encryption to obtain the signature.

Various uses of the above described web server 1 are envisaged, including for example a smart card issuing system in which data files contained in the first memory 9 are used for issuing smart cards and contain confidential codes and information. The process of issuing a smart card via the internet requires a form filling function to be performed so that client particulars can be provided to the system. The server 1 is in this example therefore required to generate response messages for presenting web pages containing such forms. The security provided by the above embodiments ensures that an attacker cannot modify the web pages containing such forms presented to the client and therefore prevents the possibility of fraudulent diversion of information or substitution of information in the web page to induce the client to part with information provided to the attacker.

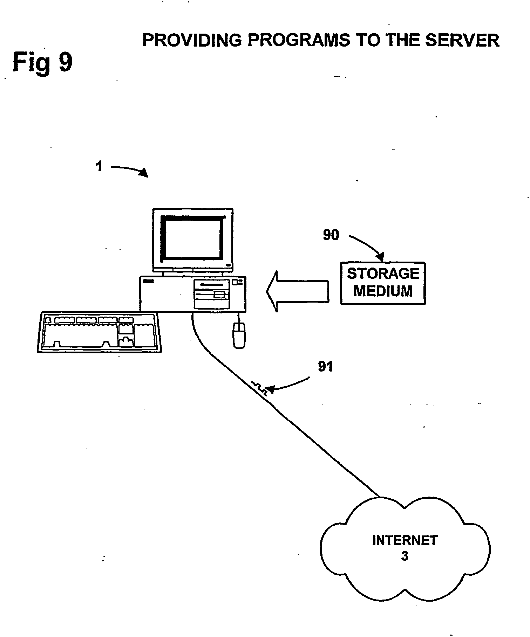

Figure 9 illustrates schematically the manner in which the programs required for operation of the web server may be installed. Programs stored on a storage medium 90 may be input to a reader of the web server apparatus 1. Alternatively, programs may be received over a network such as the internet 3 in the form of electronic signals 91.

An aspect of the present invention thus provides a storage medium 90 storing processor implementable instructions for controlling a processor to carry out the method as described above. Additionally, in accordance with another aspect of the present invention there is provided an electrical signal 91 carrying processor implementable instructions for controlling a processor to carry out the method as described above.

Alternative embodiments within the scope of the present invention are envisaged. For example, whereas the example of Figure 1 operates using a single processor, the web server 1 may operate using a plurality of processors. In particular, the division represented in Figure 1 by dotted line 18 may designate a division of control exercised by two separate processors, the signing and data maintenance tasks being performed by a second processor (not shown). The components 17, 15, 14 and 10 may be located remotely from the remainder of the web server 1 and may be connected thereto via a private or public network using appropriate firewalls and security measures.

The preferred embodiment has been described with reference to the use of a smart card as the private key carrier 16. Other forms of carrier 16 are contemplated including an HSM (Hardware Security Module) which includes a hard disc device with an internal processor to provide secure encrypted data storage. The HSM is transportable and may be securely stored away from the web server 1 under the control of a system controller.

Other forms of portable private key carrier 16 may simply be data carriers not including any processing capability and may include optically encoded cards or other suitable storage media.

Optionally, the integrity of files contained in the first memory 9 may be systematically checked by a file maintenance program. This procedure may for example be timed to coincide with periods in which the web server 1 is idle or being used at less than full capacity.

In the above description, the contents of the stored files are typically data used in applications for generating a web page. The files may similarly contain computer programs for use in web page generation, for example, compiled programs in executable form or programs for input to an operating environment during web page generation, and the term file "contents" should be construed broadly to include such programs where appropriate.

In the above description, the names IIS and ISAPI are trademarks.

## Claims

1. A method of responding to a request for information, the method comprising:
operating at least one processor (20) to perform the steps of:
generating (39) requested information using contents of at least one file (60,63,66,69) stored in a first memory (9) which is accessible to the processor for both reading and writing; and, before completing the generating step,
performing a verification step (33) to verify the integrity of each file required by the generating step;
wherein the verification step comprises a repairing step (38) of repairing any of the required files whose integrity cannot be verified by replacing the contents of the file using a master copy of the file stored in a second memory (10) to which the processor has access on a read only basis.

2. A method as claimed in claim 1 comprising the step of trapping (31) the incoming request by action of a filter (7) which releases the request after completion of the verification step.

3. A method as claimed in any preceding claim wherein the verification step comprises calculating (43) a security value by applying a verification function to the contents of the file and comparing (44) the security value with a respective reference value.

4. A method as claimed in claim 3 comprising determining the reference value in respect of the file by decrypting (42) a corresponding signature stored in the first memory.

5. A method as claimed in claim 4 comprising the step of reading (41) the signature from a header portion (62,65,68) of the file.

6. A method as claimed in claim 4 comprising the step of reading the signature from a look up table (690) relating file identifiers (691) to respective signatures (692).

7. A method as claimed in any preceding claim wherein the repairing step comprises reading (37) the contents of the master file from the second memory and writing (38) the contents in the corresponding file in the first memory.

8. A method as claimed in claim 7 wherein the repair step further comprises reading the signature of the file in the second memory and writing the signature in the first memory.

9. A method as claimed in any preceding claim wherein the second memory comprises a recording medium which is non-rewritable.

10. A method as claimed in claim 9 wherein the recording medium is a CD ROM.

11. A method as claimed in any preceding claim comprising an initializing step in which the files are stored in the first and second memories, the initializing step comprising for each file the steps of:
applying a verification function to the contents of the file to generate (51) a respective reference value;
encrypting (53) the reference value to obtain a signature (62); and
storing (56) the file contents and signature in each of the first and second memories.

12. A method as claimed in claim 11 wherein the encryption step comprises utilising a first key ((19) read from a portable key carrier (16) which is presented to a key access device (17) during the encryption process and which is subsequently removed therefrom.

13. A method as claimed in claim 12 wherein the verification step comprises decrypting the stored signature using a second key (82) available to the processor.

14. A method as claimed in any preceding claim comprising the step of generating (36) an alarm condition in the event that the verification step determines that the integrity of a file cannot be verified.

15. A method as claimed in any preceding claim wherein the requested information is in the form of a web page.

16. A method as claimed in any preceding claim wherein the request is received via the Internet (3).

17. Apparatus for responding to a request for information, the apparatus comprising:
at least one processor (20);
a first memory (9) accessible to the processor for both reading and writing;
a second memory (10) accessible to the processor on a read only basis;
the at least one processor being operable to provide:
generating means (6) for generating requested information using the contents of at least one file (60,63,66,69) stored in the first memory; and
verification means (11) for verifying before operation of the generating means the integrity of each file required by the generating means;
and further comprising repairing means (12) for repairing any of the required files whose integrity cannot be verified by replacing the contents of the file using a master copy of the file stored in the second memory.

18. Apparatus as claimed in claim 17 comprising a filter (7) for trapping the incoming request and releasing the request after completion of the file verification.

19. Apparatus as claimed in any of claims 17 and 18 wherein the verification means comprises calculating means for calculating a security value (81) by applying a verification function (80) to the contents of the file and comparing means (84) for comparing the security value with a respective reference value (83).

20. Apparatus as claimed in claim 19 comprising decryption (72) means for decrypting a signature (62) stored in the first memory to determine the reference value.

21. Apparatus as claimed in claim 20 comprising reading means for reading the signature from a header portion (62,65,68) of the file.

22. Apparatus as claimed in claim 20 comprising reading means for reading the signature from a look up table (690) relating file identifiers (691) to respective signatures (692).

23. Apparatus as claimed in any of claims 17 to 22 wherein the repairing means comprises means for reading the contents of the master file from the second memory and means for writing the contents in the corresponding file in the first memory.

24. Apparatus as claimed in claim 23 wherein the repairing means further comprises means for reading the signature of the file in the second memory and writing the signature in the first memory.

25. Apparatus as claimed in any of claims 17 to 24 wherein the second memory comprises a recording medium which is non-rewritable.

26. Apparatus as claimed in claim 25 wherein the recording medium is a CD ROM.

27. Apparatus as claimed in any of claims 17 to 26 comprising initializing means for storing the files in the first and second memories, the initializing means comprising:
means for applying a verification function to the contents of each file to generate a respective reference value;
encryption means (15) for encrypting the reference value to obtain a signature; and
means (14) for storing the file contents and signature in each of the first and second memories.

28. Apparatus as claimed in claim 27 wherein the encryption means is operable to utilise a first key (19) read from a portable key carrier (16) which is presented in use to a key access device (17) of said apparatus during the encryption process and which is subsequently removed therefrom.

29. Apparatus as claimed in claim 28 wherein the verification means comprises decryption means (72) for decrypting the stored signature using a second key available to the processor.

30. Apparatus as claimed in any of claims 17 to 29 comprising alarm means (13) for generating an alarm condition in the event that the verification means determines that the integrity of a file cannot be verified.

31. Apparatus as claimed in any of claims 17 to 30 wherein the requested information is in the form of a web page.

32. Apparatus as claimed in any of claims 17 to 31 wherein the apparatus is constituted by a server (1) connected in use to the Internet (3) for the receiving of said requests for information.

33. A storage medium storing instructions which, when executed by a processor, causes the processor to carry out a method as claimed in any one of claims 1 to 16.

## Patentansprüche

1. Verfahren zum Beantworten einer Informationsanfrage, wobei in dem Verfahren
wenigstens ein Prozessor (20) betrieben wird, um die folgenden Schritte auszuführen:
Erzeugen (39) geforderter Information unter Verwendung von Inhalten wenigstens einer Datei (60, 63, 66, 69), die in einem ersten Speicher (9) gespeichert ist, der für den Prozessor zum Lesen und Schreiben zugänglich ist; und, vor Beendigung des Erzeugungsschritts,
Durchführen eines Verifikationsschritts (33) zum Verifizieren der Integrität der von dem Erzeugungsschritt benötigten Datei,
wobei der Verifikationsschritt einen Reparaturschritt (38) zum Reparieren jeder der benötigten Dateien aufweist, deren Integrität nicht verifiziert werden kann, indem die Inhalte der Datei unter Verwendung einer Vorlagekopie der Datei ersetzt werden, die in einem zweiten Speicher (10)- gespeichert ist, auf den der Prozessor nur Lesezugriff hat.

2. Verfahren nach Anspruch 1, wobei die eingehende Anfrage durch einen Filter (7) aufgefangen (31) wird, der die Anfrage nach Beendigung des Verifikationsschritts freigibt.

3. Verfahren nach einem der vorstehenden Ansprüche, wobei in dem Verifikationsschritt ein Sicherheitswert berechnet (43) wird, indem eine Verifikationsfunktion auf die Inhalte der Datei angewendet wird, und der Sicherheitswert mit einem zugehörigen Referenzwert verglichen (44) wird.

4. Verfahren nach Anspruch 3, wobei der Referenzwert bezüglich der Datei bestimmt wird, indem eine entsprechende Signatur entschlüsselt (42) wird, die in dem ersten Speicher gespeichert ist.

5. Verfahren nach Anspruch 4, wobei die Signatur aus einem Kopfabschnitt (62, 65, 68) der Datei gelesen (41) wird.

6. Verfahren nach Anspruch 4, wobei die Signatur von einer Nachschlagetabelle (690) gelesen wird, die Dateikennungen (691) mit zugehörigen Signaturen (692) in Beziehung setzt.

7. Verfahren nach einem der vorstehenden Ansprüche, wobei in dem Reparaturschritt die Inhalte der Vorlagedatei von dem zweiten Speicher gelesen (37) und in die entsprechende Datei in den ersten Speicher geschrieben (38) werden.

8. Verfahren nach Anspruch 7, wobei in dem Reparaturschritt ferner die Signatur der Datei in dem zweiten Speicher gelesen und in den ersten Speicher geschrieben wird.

9. Verfahren nach einem der vorstehenden Ansprüche, wobei der zweite Speicher ein nicht wiederbeschreibbares Aufzeichnungsmedium aufweist.

10. Verfahren nach Anspruch 9, wobei das Aufzeichnungsmedium eine CD-ROM ist.

11. Verfahren nach einem der vorstehenden Ansprüche, ferner mit einem Initialisierungsschritt, in dem die Dateien in dem ersten und dem zweiten Speicher gespeichert werden, wobei der Initialisierungsschritt für jede Datei die folgenden Schritte umfaßt:
Anwenden einer Verifikationsfunktion auf die Inhalte der Datei, um einen zugehörigen Referenzwert zu erzeugen (51),
Verschlüsseln (53) des Referenzwerts, um eine Signatur (62) zu erhalten, und
Speichern (56) der Dateiinhalte und der Signatur in sowohl dem ersten als auch dem zweiten Speicher.

12. Verfahren nach Anspruch 11, wobei in dem Verschlüsselungsschritt ein erster Schlüssel (19) verwendet wird, der von einem tragbaren Schlüsselträger (16) gelesen wird, der während des Verschlüsselungsvorgangs einer Schlüsselzugangsvorrichtung (17) präsentiert und anschließend davon entfernt wird.

13. Verfahren nach Anspruch 12, wobei in dem Verifikationsschritt die gespeicherte Signatur entschlüsselt wird, indem ein zweiter Schlüssel (82) verwendet wird, der für den Prozessor verfügbar ist.

14. Verfahren nach einem der vorstehenden Ansprüche, wobei ein Alarmzustand erzeugt (36) wird, falls in dem Verifikationsschritt bestimmt wird, daß die Integrität einer Datei nicht verifiziert werden kann.

15. Verfahren nach einem der vorstehenden Ansprüche, wobei die beantragte Information in Form einer Web-Seite vorliegt.

16. Verfahren nach einem der vorstehenden Ansprüche, wobei die Anfrage über das Internet (3) empfangen wird.

17. Gerät zum Beantworten einer Informationsanfrage, mit
wenigstens einem Prozessor (20),
einem ersten Speicher (9), der für den Prozessor zum Lesen und Schreiben zugänglich ist,
einem zweiten Speicher (10), der für den Prozessor nur zum Lesen zugänglich ist,
wobei der wenigstens eine Prozessor dazu betreibbar ist, folgendes bereitzustellen:
eine Erzeugungseinrichtung (6) zum Erzeugen geforderter Information unter Verwendung der Inhalte wenigstens einer Datei (60, 63, 66, 69), die in dem ersten Speicher gespeichert ist, und
eine Verifikationseinrichtung (11), um vor dem Betrieb der Erzeugungseinrichtung die Integrität jeder von der Erzeugungseinrichtung benötigten Datei zu verifizieren, und
ferner mit einer Reparatureinrichtung (12), um jede der benötigten Dateien, deren Integrität nicht verifiziert werden kann, zu reparieren, indem die Inhalte der Datei unter Verwendung einer in dem zweiten Speicher gespeicherten Vorlagekopie der Datei ersetzt werden.

18. Gerät nach Anspruch 17 mit einem Filter (7) zum Auffangen der eingehenden Anfrage und Freigeben der Anfrage nach Beendigung der Dateiverifikation.

19. Gerät nach Anspruch 17 oder 18, wobei die Verifikationseinrichtung eine Berechnungseinrichtung zum Berechnen eines Sicherheitswerts (81) durch Anwenden einer Verifikationsfunktion (80) auf die Inhalte der Datei und eine Vergleichseinrichtung (84) zum Vergleichen des Sicherheitswerts mit einem zugehörigen Referenzwert (83) aufweist.

20. Gerät nach Anspruch 19 mit einer Entschlüsselungseinrichtung (72) zum Entschlüsseln einer in dem ersten Speicher gespeicherten Signatur (62), um den Referenzwert zu bestimmen.

21. Gerät nach Anspruch 20 mit einer Leseeinrichtung zum Lesen der Signatur aus einem Kopfabschnitt (62, 65, 68) der Datei.

22. Gerät nach Anspruch 20 mit einer Leseeinrichtung zum Lesen der Signatur aus einer Nachschlagetabelle (690), die Dateikennungen (691) mit zugehörigen Signaturen (692) in Beziehung setzt.

23. Gerät nach einem der Ansprüche 17 bis 22, wobei die Reparatureinrichtung eine Einrichtung zum Lesen der Inhalte der Vorlagedatei von dem zweiten Speicher und eine Einrichtung zum Schreiben der Inhalte in die entsprechende Datei in dem ersten Speicher aufweist.

24. Gerät nach Anspruch 23, wobei die Reparatureinrichtung ferner eine Einrichtung zum Lesen der Signatur der Datei in dem zweiten Speicher und Schreiben der Signatur in den ersten Speicher aufweist.

25. Gerät nach einem der Ansprüche 17 bis 24, wobei der zweite Speicher ein nicht wiederbeschreibbares Aufzeichnungsmedium aufweist.

26. Gerät nach Anspruch 25, wobei das Aufzeichnungsmedium eine CD-ROM ist.

27. Gerät nach einem der Ansprüche 17 bis 26, mit einer Initialisiereinrichtung zum Speichern der Dateien in dem ersten und dem zweiten Speicher, wobei die Initialisiereinrichtung aufweist:
eine Einrichtung zum Anwenden einer Verifikation auf die Inhalte jeder Datei, um einen zugehörigen Referenzwert zu erzeugen,
eine Verschlüsselungseinrichtung (15) zum Verschlüsseln des Referenzwerts, um eine Signatur zu erhalten, und
eine Einrichtung (14) zum Speichern der Dateiinhalte und der Signatur sowohl in dem ersten als auch in dem zweiten Speicher.

28. Gerät nach Anspruch 27, wobei die Verschlüsselungseinrichtung dazu betreibbar ist, einen ersten Schlüssel (19) zu verwenden, der aus einem tragbaren Schlüsselträger (16) gelesen wird, der während des Verschlüsselungsvorgangs in Gebrauch einer Schlüsselzugriffsvorrichtung (17) des Geräts präsentiert und anschließend davon entfernt wird.

29. Gerät nach Anspruch 28, wobei die Verifikationseinrichtung eine Entschlüsselungseinrichtung (72) zum Entschlüsseln der gespeicherten Signatur unter Verwendung eines zweiten Schlüssels aufweist, der für den Prozessor zugänglich ist.

30. Gerät nach einem der Ansprüche 17 bis 29 mit einer Alarmeinrichtung (13) zum Erzeugen eines Alarmzustands, falls die Verifikationseinrichtung bestimmt, daß die Integrität einer Datei nicht verifiziert werden kann.

31. Gerät nach einem der Ansprüche 17 bis 30, wobei die benötigte Information in Form einer Web-Seite vorliegt.

32. Gerät nach einem der Ansprüche 17 bis 31, wobei das Gerät in einem Server (1) besteht, der im Gebrauch an das Internet (3) angeschlossen ist, um die Informationsanfragen zu empfangen.

33. Speichermedium, das Befehle speichert, die bei Ausführung durch einen Prozessor den Prozessor dazu veranlassen, ein Verfahren gemäß einem der Ansprüche 1 bis 16 auszuführen.

## Revendications

1. Procédé pour répondre à une demande d'informations, le procédé consistant à :
faire fonctionner au moins un processeur (20) pour exécuter les étapes consistant à :
générer (39) des informations demandées en utilisant le contenu d'au moins un fichier (60, 63, 66, 69) stocké dans une première mémoire (9) qui est accessible au processeur tant en lecture qu'en écriture ; et avant d'achever l'étape de génération,
exécuter une étape de vérification (33) pour vérifier l'intégrité de chaque fichier demandé par l'étape de génération ;
dans lequel l'étape de vérification comprend une étape de réparation (38) consistant à réparer les éventuels fichiers demandés dont l'intégrité ne peut pas être vérifiée en remplaçant le contenu du fichier au moyen d'une copie maîtresse du fichier stockée dans une deuxième mémoire (10) à laquelle le processeur a accès en lecture seule.

2. Procédé selon la revendication 1, comprenant l'étape consistant à intercepter (31) la demande entrante par l'action d'un filtre (7) qui libère la demande après achèvement de l'étape de vérification.

3. Procédé selon l'une quelconque des revendications précédentes, dans lequel l'étape de vérification consiste à calculer (43) une valeur de sécurité en appliquant une fonction de vérification au contenu du fichier et en comparant (44) la valeur de sécurité à une valeur de référence respective.

4. Procédé selon la revendication 3, consistant à déterminer la valeur de référence concernant le fichier en décryptant (42) une signature correspondante stockée dans la première mémoire.

5. Procédé selon la revendication 4, comprenant l'étape consistant à lire (41) la signature dans une partie d'en-tête (62, 65, 68) du fichier.

6. Procédé selon la revendication 4, comprenant l'étape consistant à lire la signature dans une table de consultation (690) liant des identificateurs de fichiers (691) à des signatures respectives (692).

7. Procédé selon l'une quelconque des revendications précédentes, dans lequel l'étape de réparation consiste à lire (37) le contenu du fichier maître dans la deuxième mémoire et à écrire (38) le contenu du fichier correspondant dans la première mémoire.

8. Procédé selon la revendication 7, dans lequel l'étape de réparation consiste en outre à lire la signature du fichier dans la deuxième mémoire et à écrire la signature dans la première mémoire.

9. Procédé selon l'une quelconque des revendications précédentes, dans lequel la deuxième mémoire comprend un support d'enregistrement qui est non réinscriptible.

10. Procédé selon la revendication 9, dans lequel le support d'enregistrement est un CD-ROM.

11. Procédé selon l'une quelconque des revendications précédentes, comprenant une étape d'initialisation lors de laquelle les fichiers sont stockés dans les première et deuxième mémoires, l'étape d'initialisation comprenant, pour chaque fichier, les étapes consistant à :
appliquer une fonction de vérification au contenu du fichier pour générer (51) une valeur de référence respective ;
crypter (53) la valeur de référence pour obtenir une signature (62) ; et
stocker (56) le contenu et la signature du fichier dans chacune des première et deuxième mémoires.

12. Procédé selon la revendication 11, dans lequel l'étape de cryptage consiste à utiliser une première clé (19) lue sur un support de clé portatif (16) qui est présenté à un dispositif d'accès par clé (17) pendant le processus de cryptage et qui en est ensuite retiré.

13. Procédé selon la revendication 12, dans lequel l'étape de vérification consiste à décrypter la signature stockée en utilisant une deuxième clé (82) accessible au processeur.

14. Procédé selon l'une quelconque des revendications précédentes, comprenant l'étape consistant à générer (36) un état d'alarme dans le cas où l'étape de vérification détermine que l'intégrité d'un fichier ne peut pas être vérifiée.

15. Procédé selon l'une quelconque des revendications précédentes, dans lequel les informations demandées sont sous la forme d'une page Web.

16. Procédé selon l'une quelconque des revendications précédentes, dans lequel la demande est reçue via l'Internet (3).

17. Appareil pour répondre à une demande d'informations, l'appareil comprenant :
au moins un processeur (20) ;
une première mémoire (9) accessible au processeur tant en lecture qu'en écriture ;
une deuxième mémoire (10) accessible au processeur en lecture seule ;
l'au moins un processeur ayant pour fonction de fournir :
un moyen générateur (6) pour générer des informations demandées en utilisant le contenu d'au moins un fichier (60, 63, 66, 69) stocké dans la première mémoire ; et
un moyen de vérification (11) pour vérifier, avant la mise en fonctionnement du moyen générateur, l'intégrité de chaque fichier exigé par le moyen générateur ;
et comprenant en outre un moyen de réparation (12) pour réparer l'un quelconque des fichiers demandés dont l'intégrité ne peut pas être vérifiée en remplaçant le contenu du fichier au moyen d'une copie maîtresse du fichier stockée dans la deuxième mémoire.

18. Appareil selon la revendication 17, comprenant un filtre (7) pour intercepter la demande entrante et libérer la demande après achèvement de la vérification du fichier.

19. Appareil selon l'une quelconque des revendications 17 et 18, dans lequel le moyen de vérification comprend un moyen de calcul pour calculer une valeur de sécurité (81) en appliquant une fonction de vérification (80) au contenu du fichier et un moyen de comparaison (84) pour comparer la valeur de sécurité à une valeur de référence respective (83).

20. Appareil selon la revendication 19, comprenant un moyen de décryptage (72) pour décrypter une signature (62) stockée dans la première mémoire afin de déterminer la valeur de référence.

21. Appareil selon la revendication 20, comprenant un moyen de lecture pour lire la signature depuis une partie d'en-tête (62, 65, 68) du fichier.

22. Appareil selon la revendication 20, comprenant un moyen de lecture pour lire la signature dans une table de consultation (690) reliant des identificateurs de fichiers (691) à des signatures respectives (692).

23. Appareil selon l'une quelconque des revendications 17 à 22, dans lequel le moyen de réparation comprend un moyen pour lire le contenu du fichier maître dans la deuxième mémoire et un moyen pour écrire le contenu du fichier correspondant dans la première mémoire.

24. Appareil selon la revendication 23, dans lequel le moyen de réparation comprend en outre un moyen pour lire la signature du fichier dans la deuxième mémoire et écrire la signature dans la première mémoire.

25. Appareil selon l'une quelconque des revendications 17 à 24, dans lequel la deuxième mémoire comprend un support d'enregistrement non réinscriptible.

26. Appareil selon la revendication 25, dans lequel le support d'enregistrement est un CD-ROM.

27. Appareil selon l'une quelconque des revendications 17 à 26, comprenant un moyen d'initialisation pour stocker les fichiers dans les première et deuxième mémoires, le moyen d'initialisation comprenant :
un moyen pour appliquer une fonction de vérification au contenu de chaque fichier afin de générer une valeur de référence respective ;
un moyen de cryptage (15) pour crypter la valeur de référence afin d'obtenir une signature ; et
un moyen (14) pour stocker le contenu du fichier et la signature dans chacune des première et deuxième mémoires.

28. Appareil selon la revendication 27, dans lequel le moyen de cryptage a pour fonction d'utiliser une première clé (19) lue depuis un support de clé portatif (16) qui est présenté lors de l'utilisation à un dispositif d'accès par clé (17) dudit appareil pendant le processus de cryptage et qui en est ensuite retiré.

29. Appareil selon la revendication 28, dans lequel le moyen de vérification comprend un moyen de décryptage (72) pour décrypter la signature stockée en utilisant une deuxième clé disponible au processeur.

30. Appareil selon l'une quelconque des revendications 17 à 29, comprenant un moyen d'alarme (13) pour générer un état d'alarme dans le cas où le moyen de vérification détermine que l'intégrité du fichier ne peut pas être vérifiée.

31. Appareil selon l'une quelconque des revendications 17 à 30, dans lequel les informations demandées sont sous la forme d'une page Web.

32. Appareil selon l'une quelconque des revendications 17 à 31, dans lequel l'appareil est constitué d'un serveur (1) connecté lors de l'utilisation à l'Internet (3) pour la réception desdites demandes d'informations.

33. Support de stockage stockant des instructions qui, lorsqu'elles sont exécutées par un processeur, font en sorte que le processeur mette en oeuvre un procédé selon l'une quelconque des revendications 1 à 16.
